# EUROPEAN PATENT APPLICATION

(11) **EP 3 553 480 A1**
(43) Date of publication of application: **16.10.2019**
(21) Application number: 18166662.9
(22) Date of filing: 10.04.2018
(51) Int. Cl.: G01K 1/14, G01K 1/16

(54) **ACCURATE TEMPERATURE MEASUREMENTS IN AN ELECTRIC GENERATOR**

(71) Applicant: Siemens Gamesa Renewable Energy A/S, 7330 Brande (DK)
(72) Inventor: Airoldi, Giovanni, 8000 Aarhus (DK)
(74) Representative: Aspacher, Karl-Georg

(57) **Abstract**

Housing (100) for a temperature sensor (200) for measuring the temperature in a coil segment (18) of an electric generator (11), the housing (100) including:
- a cavity (150) for housing at least a temperature sensor (200) ;
- at least a first portion (110) having a first interface (111) attachable to said coil segment (18), and
- at least a second portion (120) having a second interface (122) subject to contact a fluid cooling medium,

The first portion (110) has a greater thermal conductivity than the second portion (120).

## Description

### Field of invention

The present invention relates to accurate temperature measurements in electric generators. In particular, the present invention can be used for accurate temperature measurements of the end-windings of an electrical generator. Particularly, but not exclusively, the present invention applies to electric generator included in wind turbines.

### Art Background

For electric generator of the kind the output power depends on the generator ability to deliver such power. This is typically limited by thermal constraints and more specifically by the maximum temperature measured in the coils installed in the stator of the generator.

When the turbine reaches full power, all fans are working at their maximum capacity. In such condition, in order to keep the generator maximum temperature below the limit allowed by the insulation class, the produced power needs to be reduced. It is then important that an accurate temperature measurement is in place, as it directly affects the power output of the wind turbine.

A wrong temperature reading is detrimental for the turbine performance. A temperature reading lower than the real temperature would allow a power production higher than the possible one, causing the windings to be over the temperature limit defined by the insulation class. This would cause a reduction of the lifetime of the windings. Conversely, a temperature reading higher than the real temperature would cause the turbine to start the power reduction too early (at a too low power level), reducing the power which could be produced and causing a reduction of the energy produced.

The highest coil temperatures are normally measured in the end-windings.

It is known to measure the end winding temperatures by installing a cylinder of an insulator material (for example mica) under the outer layer of the end-winding insulation. This tube is installed before the vacuum pressure impregnation process used to impregnate the segment insulation with resin. The temperature sensors are subsequently inserted in the tube during the assembly of the generator parts.

Since the cylinder is made of an insulation material, there is a non-negligible temperature drop between the respective end-winding and temperature sensor installed inside the tube. Furthermore, since the surface of the end winding where the mica cylinder is positioned is not even, a good contact between such surface and the tube cannot always be guaranteed. This introduces variability of the measurements.

It is therefore still needed to provide a more suitable interface between a temperature sensor and a coil, in particular an end-winding, to accurately measure the coil temperature.

### Summary of the Invention

This need is met by the subject matter according to the independent claims. Advantageous embodiments of the present invention are described by the dependent claims.

According to a first aspect of the invention, it is provided a housing for a temperature sensor for measuring the temperature in a coil segment of an electric generator, the housing including:
- a cavity for housing at least a temperature sensor,
- at least a first portion having a first interface attachable to said coil segment, and
- at least a second portion having a second interface subject to contact a fluid cooling medium,
wherein the first portion has a greater thermal conductivity than the second portion.

According to a second aspect of the invention, a stator for an electrical generator is provided. The stator includes a plurality of coils and a plurality of end-winding and at least an housing for a temperature sensor as described above, wherein the first interface of the housing is attached to one of said plurality of end-windings.

This invention can be efficiently adapted to the cooling apparatus comprised in an electric generator of a wind turbine.

According to embodiments of present invention, the first portion is made of a thermally conductive first material and the second portion is made of a thermally insulating second material.

A sensor housing of the present inventions comprises two main portion made of two respective materials where the portion in contact with the coil segment has a comparatively higher thermal conductivity and a comparatively large contact surface with the end winding.

According to embodiments of present invention, the chosen first material may be a good thermal conductor and an electrical insulator at the same time. This characteristic may be found in ceramic material, such as Alumina.

The second portion of the sensor housing, on the side cooled by the air, may be conveniently made by a low conductivity material such as mica or fiberglass. Such material reduces the heat flux toward the cooling air, hence the temperature difference between the sensor and the end winding.

The described solution allows a more accurate temperature measurement reducing only negligibly the cooling of the end winding.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine including a stator for a wind turbine according to the present invention.
- Figure 2: shows a schematic cross section of an exemplary electric generator included in a wind turbine, including a stator and sensor housings according to the present invention,
- Figure 3: shows a schematic three-dimensional view of a sensor housings according to the present invention, attached to an end-winding of the electrical generator of figure 2.
- Figure 4: shows a schematic section view of the sensor housing of figure 3.

### Detailed Description

The illustrations in the drawings are schematic. It is noted that in different figures, similar or identical elements are provided with the same reference signs.

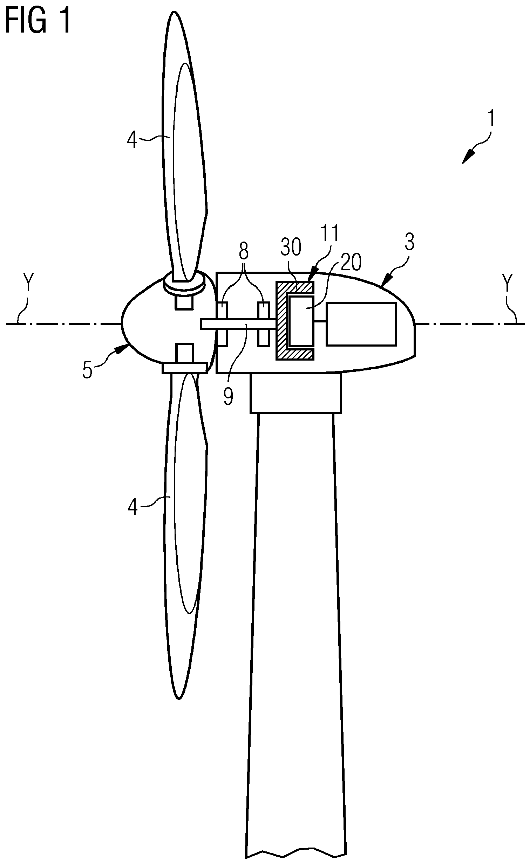

**Figure 1** shows a wind turbine 1 according to the invention. The wind turbine 1 comprises a tower 2, which is mounted on a non-depicted fundament. A nacelle 3 is arranged on top of the tower 2.

The wind turbine 1 further comprises a wind rotor 5 having two, three or more blades 4 (in the perspective of Figure 1 only two blades 4 are visible). The wind rotor 5 is rotatable around a rotational axis Y. In general, when not differently specified, the terms axial, radial and circumferential in the following are made with reference to the rotational axis Y.

The blades 4 extend radially with respect to the rotational axis Y.

The wind turbine 1 comprises a concentrated winding electric generator 11.

The wind rotor 5 is rotationally coupled with the electric generator 11 by means of a rotatable main shaft 9.

According to other possible embodiments of the present invention (not represented in the attached figures), the wind rotor 5 is rotationally coupled directly with the electric generator 11 (direct-drive generator configuration).

A schematically depicted bearing assembly 8 is provided in order to hold in place the rotor 5. The rotatable main shaft 9 extends along the rotational axis Y. The electric generator 11 includes a stator 20 and a rotor 30. The rotor 30 is radially external to the stator 20 and is rotatable with respect to the stator 30 about the rotational axis Y.

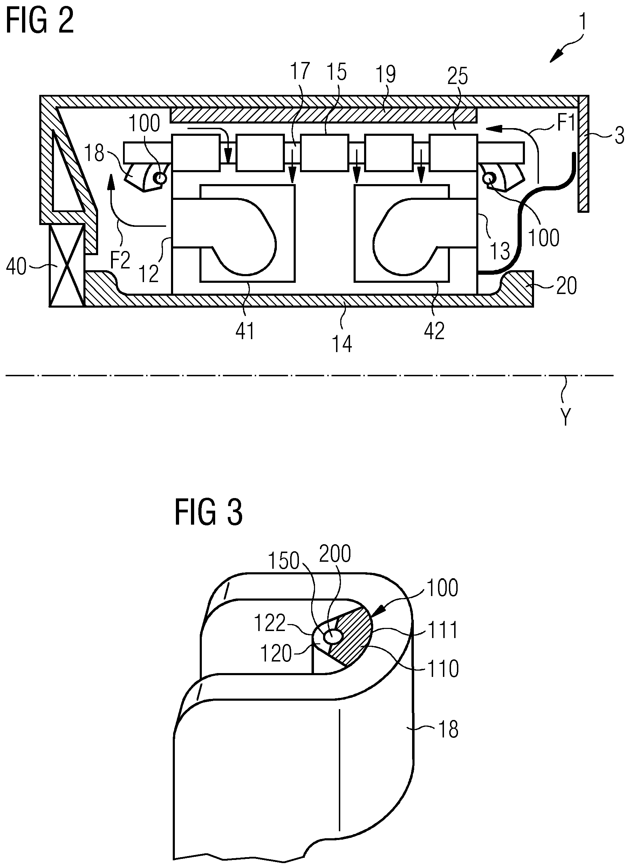

**Figure 2** shows a schematic cross section of the electric generator 11. The electric generator 11 comprises two cooling fans 41, 42. According to other possible embodiments, the electric generator 11 comprises a different number of cooling fans.

With respect to the rotational axis Y, the stator 20 extends:
- axially between a first axial end 12 and a second axial end 13;
- radially between an inner circumferential surface 14 and an outer circumferential surface 15.

Close to the outer circumferential surface 15, the stator 20 includes a plurality of coils 17, connected, at the axial ends 12, 13, by a plurality of end-windings 18.

The rotor 30 surrounds the stator 20 and includes a plurality of permanent magnets 19, separated from the outer circumferential surface 15 of the stator 20 by the rotor stator gap 25. A bearing 40 is mounted between the rotor 30 and the stator 20 for allowing the rotation of the rotor around the rotational axis Y.

In their active state, the cooling fans 41, 42 generate air flows F1, F2 through the electric generator 11, which works as cooling medium flows for cooling the end-windings 18 and the permanent magnets 19.

The electric generator 11 further includes a plurality of housings 100 for a respective plurality of temperature sensors 200, for measuring the temperature in the end-windings 18.

The housings 100 are attached to an inside of the end-winding 18. In the context of the present invention "inside" and "outside" is referred to the curves shape of the end-windings. In other words, the "inside" of an end-winding is the volume of air comprised between the end-winding and the stator, while the "outside" of an end-winding is the volume of air extending outwardly from the end-winding. With "outwardly" it is meant a direction oriented from the stator, in particular along the rotational axis of the rotor of the electric generator. The inside and the outside of the end-windings 18 are both in fluid and thermal contact with the air flows F1, F2.

According to other embodiment of the present invention (not shown), the housings 100 and the sensors 200 may be used for measuring the temperatures of other segments of the coils 17, different from the end-windings 18.

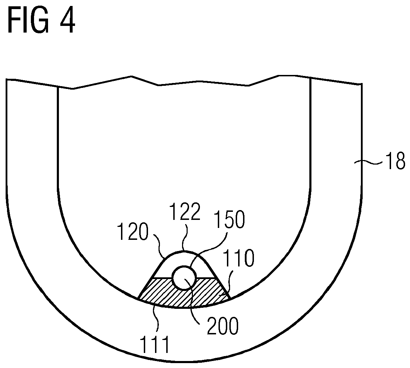

**Figures 3** and **4** show an end-winding 18 and a housing 100 for a temperature sensor 200 attached to an inside of the end-winding 18.

The housing 100 includes:
- a central cylindrical cavity 150 for housing one or more temperature sensors 200,
- a first portion 110 having a first interface 111 attached to the end-windings 18, and
- a second portion 120 having a second interface 122 subject to be in fluid and thermal contact with the one or both of the air flows F1, F2.

The first portion 110 has a greater thermal conductivity than the second portion 120.

The first interface 111 has a larger extension than the second interface 122.

The first material is chosen so as to be a good thermal conductor. In addition, the first material may be also an electrical insulator. This characteristic may be found in ceramic materials. A convenient ceramic material to be used as first material may be Alumina.

The second portion of the sensor housing is conveniently made by a low conductivity material, such as mica or fiberglass. Such material reduces the heat flux toward the cooling air flows F1, F2.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Housing (100) for a temperature sensor (200) for measuring the temperature in a coil segment (18) of an electric generator (11), the housing (100) including:
- a cavity (150) for housing at least a temperature sensor (200),
- at least a first portion (110) having a first interface (111) attachable to said coil segment (18), and
- at least a second portion (120) having a second interface (122) subject to contact a fluid cooling medium,
wherein the first portion (110) has a greater thermal conductivity than the second portion (120).

2. Housing (100) as claimed in claim 1, wherein the first portion (110) is made of a thermally conductive first material and the second portion (120) is made of a thermally insulating second material.

3. Housing (100) as claimed in claim 1 or 2, wherein the coil segment (18) is an end-winding of the electrical generator (11).

4. Housing (100) as claimed in in any of the claims 1 to 3, wherein the first material is a ceramic material.

5. Housing (100) as claimed in any of the claims 1 to 4, wherein the second material is mica or fiberglass.

6. Housing (100) as claimed in any of the claims 1 to 5, wherein the first interface (111) has a larger extension than the second interface (122).

7. Stator (20) for an electric generator (11) including a plurality of coils (17) and a plurality of end-winding (18) and at least an housing (100) for a temperature sensor (200) as claimed in any of the claims 1 to 6, the first interface (111) being attached to one of said plurality of end-windings (18).

8. Electric generator (11) including a stator (20) as claimed in claim 7.

9. Wind turbine (1) including an electric generator (11) as claimed in claim 8.
